# EUROPEAN PATENT APPLICATION

(11) **EP 4 844 814 A1**
(43) Date of publication of application: **25.11.2026**
(21) Application number: 25877578.2
(22) Date of filing: 29.09.2025
(51) Int. Cl.: H01M 4/04

(54) **ELECTRODE MANUFACTURING METHOD, ELECTRODE, AND BATTERY CELL INCLUDING SAME**

(30) Priority: 08.10.2024 KR 20240136975
(71) Applicant: LG Energy Solution, Ltd., Seoul 07335 (KR)
(72) Inventor: SHIN, Cho-Rong, Daejeon 34122 (KR)
(74) Representative: Goddar, Heinz J.
(86) International application number: PCT/KR2025/015313
(87) International publication number: WO 2026/079767

(57) **Abstract**

A method for manufacturing an electrode according to the present disclosure is a method for manufacturing an electrode in which an uncoated portion is formed on one long side by extending along the length direction of the long side, and the method includes step (a) of placing an anti-camber member in a first area where the uncoated portion of an electrode sheet is to be formed; step (b) of coating a slurry on at least a second area of the electrode sheet to laminate an active material layer, wherein the second area is an area of the electrode sheet excluding the first area; step (c) of rolling the electrode sheet where the active material layer is laminated so that both the first area and the second area of the electrode sheet are elongated; step (d) of slitting the rolled electrode sheet; step (e) of storing the slit electrode sheet; and step (f) of removing the anti-camber member from the electrode sheet to form the uncoated portion and then notching the uncoated portion.

## Description

### TECHNICAL FIELD

The present disclosure relates to a method for manufacturing an electrode, an electrode, and a battery cell including the same, and more specifically, to a method for manufacturing an electrode capable of improving the quality of an electrode and minimizing the defect rate, an electrode, and a battery cell including the same.

This application is based on and claims priority from Korean Patent Application No. 10-2024-0136975, filed on October 8, 2024, with the Korean Intellectual Property Office, the disclosure of which is incorporated herein in its entirety by reference.

### BACKGROUND ART

As the demand for portable electronic products such as laptops, video cameras, and mobile phones has rapidly increased in recent years and the development of electric vehicles, energy storage batteries, robots, and satellites has begun in earnest, research on high-performance secondary batteries that can be charged and discharged repeatedly has been actively conducted.

Currently commercialized secondary batteries include nickel cadmium batteries, nickel hydrogen batteries, nickel zinc batteries, lithium secondary batteries, and the like. Among these, lithium secondary batteries are in the spotlight as they have advantages of free charging and discharging due to almost no memory effect compared to nickel-based secondary batteries, very low self-discharge rate, and high energy density.

These lithium-ion secondary batteries mainly use a lithium-based oxide and a carbon material as a positive electrode active material and a negative electrode active material, respectively. Additionally, a lithium-ion secondary battery includes an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte solution.

Meanwhile, depending on the shape of a battery case, lithium-ion secondary batteries may be classified into pouch-type secondary batteries in which the electrode assembly is embedded in a pouch of an aluminum laminate sheet and can-type secondary batteries in which the electrode assembly is embedded in a metal can. And, the can-type secondary batteries may also be divided into cylindrical batteries and prismatic batteries according to the form of the metal can.

In addition, the electrode assembly embedded in the battery case is a power generation element that can be charged and discharged having a laminated structure of positive electrode/separator/negative electrode, and may include a jelly-roll type electrode assembly wound with a separator interposed between the long sheet-like positive electrode and negative electrode coated with an active material, a stacked electrode assembly in which multiple positive electrodes and negative electrodes cut into units of a predetermined size are sequentially stacked with a separator interposed therebetween, and a stacked/folded electrode assembly with a structure of winding bi-cells or full cells in which a predetermined unit of positive electrodes and negative electrodes are stacked with a separator interposed therebetween.

In general, the electrodes that are the positive electrode and the negative electrode of an electrode assembly undergo processes of coating a current collector with a slurry including an electrode active material in a predetermined pattern and with a uniform thickness to laminate the electrode active material layer, rolling the current collector with the active material layer laminated, slitting the rolled current collector, and then are stored for a predetermined period of time before being put into a winder. And, for notching type electrodes in which a so-called notching tab is provided on the uncoated portion, the notching process may be performed immediately before being put into the winder.

However, according to conventional methods of manufacturing an electrode, there was a high possibility of the occurrence of a so-called sliding phenomenon in which the slurry spreads into the uncoated portion during the coating process and forms an incline. When the sliding phenomenon occurs in this way, there is a problem of a decrease or reversal in the N/P ratio, and the potential for lithium (Li) precipitation.

Additionally, conventional methods of manufacturing an electrode result in a thickness difference between the coated portion where the active material layer is laminated and the uncoated portion where the active material layer is not laminated, which may cause the difference in elongation amount between the coated portion and the uncoated portion during the rolling process of the current collector where the active material layer is laminated, and this difference in elongation amount for each position may lead to camber phenomenon such as warping or swells in the electrode.

In addition, in the case of an electrode manufactured by conventional methods of manufacturing an electrode, as the current collector is stored for a long period of time until immediately before being put into the winder after rolling and slitting, various stresses such as circumferential stress or the like may continuously act on the electrode, thereby causing the phenomenon of deepening camber over time.

As described above, when the camber phenomenon occurs or deepens in the electrode, the quality of the electrode may deteriorate and the defect rate may increase. And, when winding such electrodes to manufacture battery cells, meandering defects may occur, thereby potentially leading to stability issues such as internal ignition in the battery cell.

### DISCLOSURE

### Technical Problem

The present disclosure is designed to solve the above-described problems, and therefore the present disclosure is directed to providing a method for manufacturing an electrode capable of preventing the sliding phenomenon of the active material layer, an electrode, and a battery cell including the same.

Additionally, the present disclosure is directed to providing a method for manufacturing an electrode capable of improving the quality of an electrode and minimizing the defect rate by preventing the occurrence of camber phenomenon, an electrode, and a battery cell including the same.

Additionally, the present disclosure is directed to providing a method for manufacturing an electrode capable of effectively preventing the phenomenon of deepening camber over time even during long-term storage, an electrode, and a battery cell including the same.

Technical problems to be solved by the present disclosure are not limited to the above-described problems, and other problems not mentioned herein may be clearly understood by those skilled in the art from the following description of the present disclosure.

### Technical Solution

A method for manufacturing an electrode according to the present disclosure is a method for manufacturing an electrode in which an uncoated portion is formed on one long side by extending along the length direction of the long side, and the method includes step (a) of placing an anti-camber member in a first area where the uncoated portion of an electrode sheet is to be formed; step (b) of coating a slurry on at least a second area of the electrode sheet to laminate an active material layer, wherein the second area is an area of the electrode sheet excluding the first area; step (c) of rolling the electrode sheet where the active material layer is laminated so that both the first area and the second area of the electrode sheet are elongated; step (d) of slitting the rolled electrode sheet; step (e) of storing the slit electrode sheet; and step (f) of removing the anti-camber member from the electrode sheet to form the uncoated portion and then notching the uncoated portion.

Additionally, the step (e) may be a step in which the slit electrode sheet is stored for a first period of time, and the step (f) may proceed for a second period of time from the point at which the step (e) is completed, wherein the first period of time may be longer than the second period of time.

Additionally, the anti-camber member may be provided in a strip shape corresponding to the uncoated portion, and in the step (a), the anti-camber member may be attached to the first area of the electrode sheet.

The anti-camber member may include at least one material of polypropylene, polyimide, and polyethylene terephthalate.

In the step (b), the total thickness of the first area and the total thickness of the second area may be formed to be approximately equal to each other.

In the step (b), the slurry may be coated on both the second area of the electrode sheet and the outer surface of the anti-camber member.

The electrode sheet rolled in the step (c) may be formed such that the thickness of the first area and the thickness of the second area are equal to each other.

The step (d) may include a step (d-1) in which the first area of the electrode sheet is slit.

In the step (e), the electrode sheet may be stored in a wound state.

In the step (e), the electrode sheet may be stored in a stacked state.

The anti-camber member may be configured with a plurality of layers.

The anti-camber member may be provided such that one layer of the anti-camber member and another layer of the anti-camber member have different physical properties.

An electrode according to the present disclosure is manufactured by the method for manufacturing an electrode according to the present disclosure.

A battery cell according to the present disclosure includes at least one electrode according to the present disclosure.

### Advantageous Effects

According to the present disclosure, there may be provided a method for manufacturing an electrode capable of preventing the sliding phenomenon of the active material layer, an electrode, and a battery cell including the same.

Additionally, there may be provided a method for manufacturing an electrode capable of improving the quality of an electrode and minimizing the defect rate by preventing the occurrence of camber phenomenon, an electrode, and a battery cell including the same.

Additionally, there may be provided a method for manufacturing an electrode capable of effectively preventing the phenomenon of deepening camber over time even during long-term storage, an electrode, and a battery cell including the same.

The effects to be obtained by the present disclosure are not limited to the above-described effects, and other effects not mentioned herein may be clearly understood by those having ordinary skill in the art from this specification and the accompanying drawings.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view showing the appearance of a battery cell according to an embodiment of the present disclosure.
FIG. 2 is side cross-sectional view showing the interior of a battery cell according to an embodiment of the present disclosure.
FIG. 3 is a side view showing an unfolded electrode according to an embodiment of the present disclosure.
FIG. 4 is a flowchart showing the overall process of a method for manufacturing an electrode according to an embodiment of the present disclosure.
FIG. 5 is a conceptual diagram conceptually showing the overall process of a method for manufacturing an electrode according to an embodiment of the present disclosure.
FIG. 6 is a timeline of a method for manufacturing an electrode according to an embodiment of the present disclosure.
FIG. 7 shows an electrode sheet after undergoing step (a) of a method for manufacturing an electrode according to an embodiment of the present disclosure.
FIG. 8 shows an electrode sheet after undergoing step (b) of a method for manufacturing an electrode according to an embodiment of the present disclosure.
FIG. 9 is a cross-sectional view showing an electrode sheet after undergoing step (b) of a method for manufacturing an electrode according to a modified example of an embodiment of the present disclosure.
FIG. 10 shows an electrode sheet after undergoing step (c) of a method for manufacturing an electrode according to an embodiment of the present disclosure.
FIG. 11 shows an electrode sheet after undergoing step (d) of a method for manufacturing an electrode according to an embodiment of the present disclosure.
FIG. 12 shows a state in which an electrode sheet is stored in step (e) of a method for manufacturing an electrode according to an embodiment of the present disclosure.
FIG. 13 shows a state in which an electrode sheet is stored in step (e) of a method for manufacturing an electrode according to another modified example of an embodiment of the present disclosure.
FIGS. 14 and 15 show an electrode sheet after undergoing step (f) of a method for manufacturing an electrode according to an embodiment of the present disclosure.
FIG. 16 is a cross-sectional view showing an electrode sheet after undergoing step (c) of a method for manufacturing an electrode according to another embodiment of the present disclosure.
FIG. 17 is a cross-sectional view showing an electrode sheet after undergoing step (c) of a method for manufacturing an electrode according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

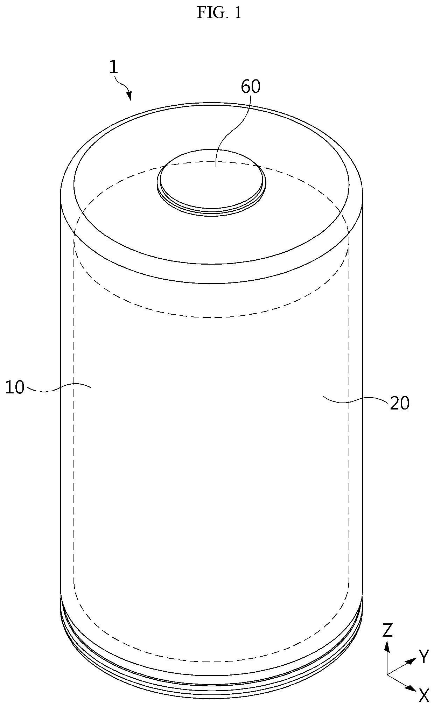

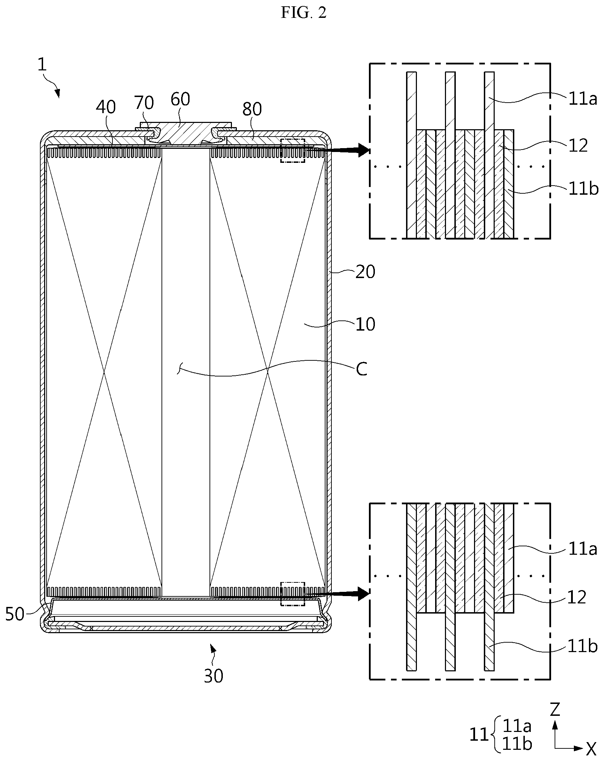

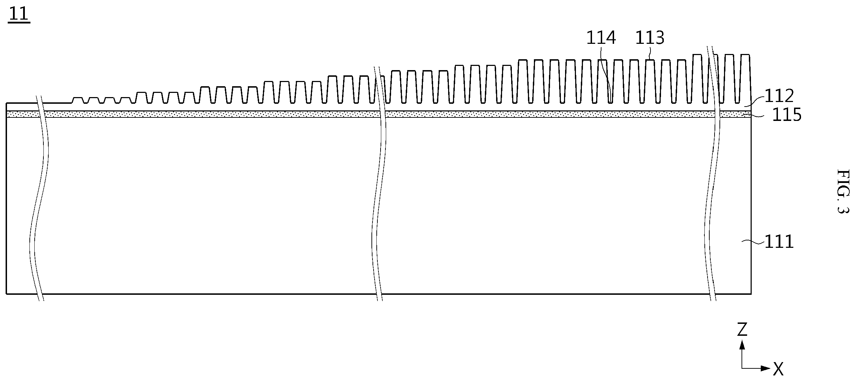

FIG. 1 is a perspective view showing the appearance of a battery cell according to an embodiment of the present disclosure, FIG. 2 is side cross-sectional view showing the interior of a battery cell according to an embodiment of the present disclosure, and FIG. 3 is a side view showing an unfolded electrode according to an embodiment of the present disclosure.

Hereinafter, a battery cell and an electrode applied to the present disclosure will be described with reference to FIGS. 1 to 3.

In particular, referring to FIGS. 1 and 2, the battery cell 1 applied to the present disclosure may include an electrode assembly 10 and a cell housing 20.

The electrode assembly 10 may include an electrode 11 and a separator 12. The electrode 11 may include a first electrode 11a and a second electrode 11b. The separator 12 may be interposed between the first electrode 11a and the second electrode 11b. The first electrode 11a may be an electrode 11 having a first polarity, and the second electrode 11b may be an electrode 11 having a second polarity opposite to the first polarity. For example, the first electrode 11a may be a positive electrode, and the second electrode 11b may be a negative electrode. The separator 12 may be an insulator.

The electrode assembly 10 may have a jelly-roll structure. That is, the electrode assembly 10 may be manufactured by winding a laminate formed by laminating the first electrode 11a and the second electrode 11b having a sheet shape at least once with a separator 12 interposed therebetween around a winding central axis C. Any jelly-roll structure known in the art may be applied to the present disclosure without limitation.

The cell housing 20 may be configured to accommodate the electrode assembly 10. The cell housing 20 may be provided in, for example, a hollow cylindrical shape to accommodate the electrode assembly 10.

A closed portion may be formed on one side (e.g., the Z-direction side) of the cell housing 20. An opening portion may be formed on the other side (e.g., the -Z-direction side) of the cell housing 20, and a cap 30 covering the opening portion may be disposed.

A first current collector plate 40 may be disposed on the inside of one side (the Z-direction side) of the cell housing 20. The first current collector plate 40 may be electrically connected to the first electrode 11a. The first current collector plate 40 may be electrically connected to a terminal 60 to be described later.

A second current collector plate 50 may be disposed on the inside of the other side (the -Z-direction side) of the cell housing 20. The second current collector plate 50 may be electrically connected to the second electrode 11b. The second current collector plate 50 may be electrically connected to the cell housing 20, and the cell housing 20 may have the second electrode 11b.

A terminal 60 may be disposed on one side (Z-direction side) of the cell housing 20. The terminal 60 may be disposed through one side (Z-direction side) of the cell housing 20 with at least a portion thereof exposed to the outside. The terminal 60 may be electrically connected to the first electrode 11a and may have the first polarity. The terminal 60 may be provided in the form of a rivet.

An insulating gasket 70 may be arranged between the terminal 60 and the cell housing 20. The insulating gasket 70 may insulate the terminal 60 and the cell housing 20 from each other.

An insulator 80 may be disposed between the first current collector plate 40 and the cell housing 20. The insulator 80 may insulate the first current collector plate 40 and the cell housing 20 from each other.

In particular, the electrode 11 provided in the electrode assembly 10 of the battery cell 1 according to the present disclosure will be described in more detail with reference to FIG. 3. The electrode 11 illustrated in FIG. 3 may be a first electrode 11a or a second electrode 11b.

The electrode 11 may have a predetermined length and width. The electrode 11 may have a predetermined length in the X-axis direction. The +X direction may be a direction toward the outer circumference of the electrode assembly 10, and the -X direction may be a direction toward the winding central axis C. The electrode 11 may have a predetermined width in the Z-axis direction.

The electrode 11 may include a coated portion 111 and an uncoated portion 112. The coated portion 111 may be a portion where an active material is laminated on one or both surfaces of the electrode 11. A positive electrode active material may be laminated on the coated portion 111 of the first electrode 11a, and a negative electrode active material may be laminated on the coated portion 111 of the second electrode 11b.

The uncoated portion 112 may be a portion of the electrode 11 where no active material is laminated. The uncoated portion 112 may be formed on one long side of the electrode 11 having a predetermined length. That is, the uncoated portion 112 may be formed on one end of the electrode 11 in the width direction (Z-axis direction). When the electrode 11 is the first electrode 11a, the uncoated portion 112 may be formed on the long side of the electrode 11 in the +Z direction, as illustrated in FIG. 3. When the electrode 11 is the second electrode 11b, the uncoated portion 112 may be formed on the long side of the electrode 11 in the -Z direction, unlike that illustrated in FIG. 3. The uncoated portion 112 may be formed to extend along the length direction of the electrode 11. For example, the uncoated portion 112 may be formed in a band shape by extending along the X direction.

The uncoated portion 112 may be exposed to the outside of the separator 12. The uncoated portion 112 may be used as an electrode tab. The uncoated portion 112 may have a plurality of foil tabs 113. At least one notching portion 114 may be formed in the uncoated portion 112, and a plurality of foil tabs 113 may be formed by the notching portion 114.

An insulating coating portion 115 may be disposed at the boundary between the uncoated portion 112 and the coated portion 111. The insulating coating portion 115 may be provided, in particular, on the first electrode 11a. The insulating coating portion 115 may prevent each coated portion 111 of the first electrode 11a and the second electrode 11b from contacting each other.

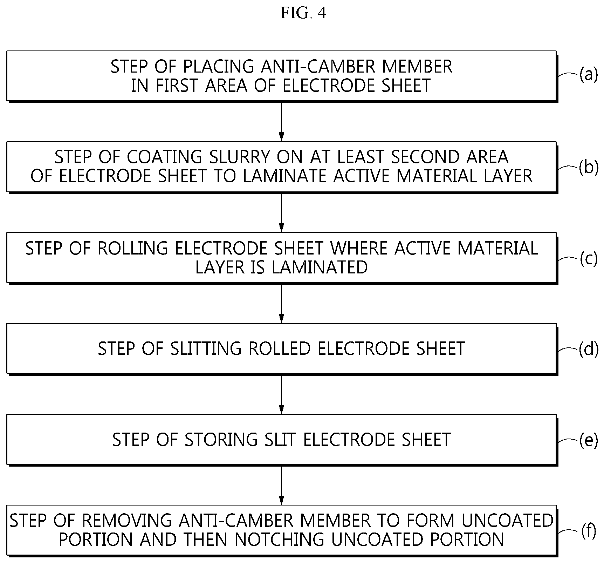

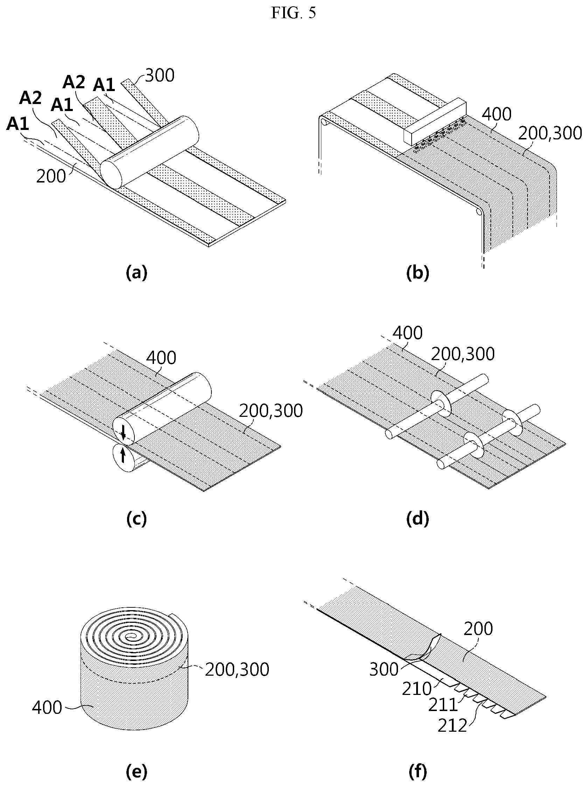

FIG. 4 is a flowchart showing the overall process of a method for manufacturing an electrode according to an embodiment of the present disclosure, and FIG. 5 is a conceptual diagram conceptually showing the overall process of a method for manufacturing an electrode according to an embodiment of the present disclosure.

Hereinafter, a method for manufacturing an electrode according to an embodiment of the present disclosure will be described in detail with reference to FIGS. 4 and 5. The method for manufacturing an electrode according to an embodiment of the present disclosure relates to a method for manufacturing electrodes 11 such as the first electrode 11a and the second electrode 11b provided in the electrode assembly 10 described above. The method for manufacturing an electrode according to an embodiment of the present disclosure may include steps (a), (b), (c), (d), (e), and (f). Steps (a) to (f) may be performed sequentially.

The step (a) may be a step of placing an anti-camber member 300 in a first area A1 of an electrode sheet 200. The electrode sheet 200 may include a conductive material such as aluminum (Al), copper (Cu), or the like. The electrode sheet 200 may be provided in the form of a rectangular sheet or foil (see FIG. 5 (a)).

The first area A1 is a portion of the electrode sheet 200, and may be an area where the uncoated portion 210 of the electrode is to be formed. The first area A1 may have a shape elongated corresponding to the uncoated portion 210 (see FIG. 5 (f)).

The anti-camber member 300 may be configured to be disposed in the first area A1 and may be provided in a shape corresponding to the first area A1. The anti-camber member 300 may have a predetermined thickness.

The step (b) may be a step of laminating an active material layer 400 on the electrode sheet 200. The active material layer 400 may be laminated by coating a slurry. The slurry may include an active material, and this slurry may be applied to the electrode sheet 200 in a predetermined pattern and with a uniform thickness, then dried and coated on the electrode sheet 200. As the slurry is coated in this way, the active material layer 400 may be laminated on the electrode (see FIG. 5 (b)).

The second area A2 may be an area of the electrode sheet 200 excluding the first area A1. The second area A2 may be an area where the coated portion of the electrode 11 is to be formed. The slurry may be coated on at least the second area A2. For example, the slurry may be coated only on the second area A2, or on both the second area A2 and the first area A1. When the slurry is coated on both the second area A2 and the first area A1, the slurry may be coated on the anti-camber member 300 disposed in the step (a).

The step (c) may be a step of rolling the electrode sheet 200 where the active material layer 400 is laminated. The step (c) may be a process in which the electrode sheet 200 where the active material layer 400 is laminated is passed between two rolls to flatten the electrode sheet 200. That is, the step (c) may be a roll-pressing process (see FIG. 5 (c)).

In the step (c), both the first area A1 and the second area A2 of the electrode sheet 200 may be elongated. The first area A1 of the electrode sheet 200 may be compressed and elongated by the anti-camber member 300, or by the anti-camber member 300 and the active material layer 400. The second area A2 of the electrode sheet 200 may be compressed and elongated by the active material layer 400.

The step (d) may be a step of slitting the rolled electrode sheet 200. In the step (d), the rolled electrode sheet 200 may be cut to a predetermined design standard using a slitter equipment (see FIG. 5 (d)).

In the step (d), a drying process of removing remaining moisture of the electrode sheet 200 may be added. This drying process may be performed by a roll-to-roll drying process.

The step (e) may be a step of storing the slit electrode sheet 200. In the step (e), the electrode sheet 200 may be stored with the anti-camber member 300 disposed thereon. The slit electrode sheet 200 may be transferred or conveyed in this stored state (see FIG. 5 (e)).

The step (f) is a step of removing the anti-camber member 300 to form the uncoated portion 210 and then notching the uncoated portion 210. In the step (f), the anti-camber member 300 may be removed from the electrode sheet 200 immediately before the notching process. That is, the notching process may proceed immediately after the anti-camber member 300 is removed from the electrode sheet 200. Meanwhile, after the step (f), a process of winding the electrode sheet may proceed (see FIG. 5 (f)).

In the method for manufacturing an electrode according to an embodiment of the present disclosure, while the anti-camber member 300 is disposed on the electrode sheet 200, the slurry may be coated to laminate the active material layer 400 and then the anti-camber member 300 may be removed to form the uncoated portion 210, so that the sliding phenomenon in which the slurry spreads into the first area A1 and forms an incline may be prevented. Accordingly, a decrease or reversal in the N/P ratio may be prevented, and lithium (Li) precipitation may also be prevented.

Additionally, when the electrode sheet 200 on which the active material layer 400 is laminated is rolled, both the first area A1 and the second area A2 of the electrode sheet 200 may be compressed and elongated, so that the difference between the elongation amount of the first area A1 and the elongation amount of the second area A2 of the electrode sheet 200 may be relatively small or little, thereby effectively preventing the camber phenomenon caused by the difference in elongation amount for each position of the electrode sheet 200.

Additionally, the slit electrode sheet 200 may be stored with the anti-camber member 300 disposed, and then the anti-camber member 300 may be removed from the electrode sheet 200 immediately before the notching process of the uncoated portion 210, so that the anti-camber member 300 may be disposed on the electrode sheet 200 for as long as possible. Accordingly, the phenomenon of deepening camber of the electrode sheet 200 over time, that is, due to the passage of time, may be effectively suppressed and prevented.

Therefore, the method for manufacturing an electrode according to an embodiment of the present disclosure may improve the quality of the electrode 11 and minimize the defect rate. And, when this electrode 11 is wound to manufacture a battery cell 1, the stability of the battery cell 1 may be improved.

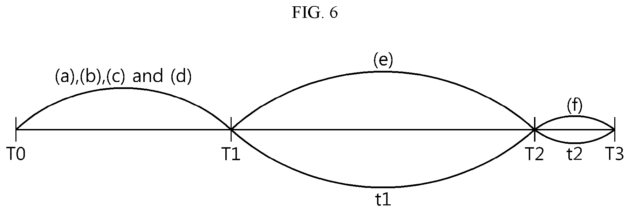

FIG. 6 is a timeline of a method for manufacturing an electrode according to an embodiment of the present disclosure.

Hereinafter, a method for manufacturing an electrode according to an embodiment of the present disclosure will be described in more detail with reference to FIGS. 4 to 6.

The step (e) is a step in which the slit electrode sheet 200 is stored for a first period of time (t1), and the step (f) may proceed for a second period of time (t2) from the time when the step (e) ends.

Specifically, referring to FIG. 6, the steps (a), (b), (c), and (d) may proceed from an initial time point T0 to a first time point T1.

The step (e) may be performed during the first period of time (t1) from the first time point T1 to a second time point T2. That is, the electrode sheet 200 slit after the step (d) may be stored for the first period of time (t1).

The step (f) may be performed during the second period of time (t2) from the second time point T2 to a third time point T3. Here, the second time point T2 may be understood as the time point at which the anti-camber member 300 begins to be removed from the electrode sheet 200.

The first period of time (t1) may be longer than the second period of time (t2). Specifically, the storage time of the slit electrode sheet 200 may be formed for a longer period time than the time required for forming the uncoated portion 210 and performing the notching process on the electrode sheet 200. The first period of time (t1) may be relatively much longer than the second period of time (t2). For example, the first period of time (t1) may be several weeks or even several months or more, which is much longer than the second period of time (t2).

Meanwhile, the first period of time (t1) may be longer than the time from the initial time point T0 to the first time point T1.

According to the method for manufacturing an electrode according to an embodiment of the present disclosure, even if the slit electrode sheet 200 is stored for a longer period of time than the time required for forming the uncoated portion 210 and performing the notching process, the phenomenon of deepening camber of the electrode sheet 200 over time may be effectively prevented by the anti-camber member 300.

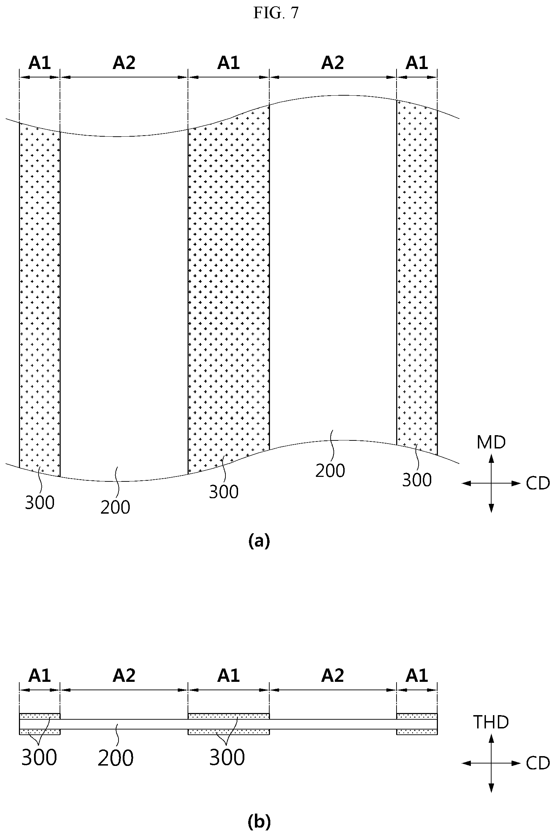

FIG. 7 shows an electrode sheet after undergoing step (a) of a method for manufacturing an electrode according to an embodiment of the present disclosure.

Prior to the description, with respect to the directions illustrated in FIG. 7 and the following drawings, the MD direction is the length direction of the electrode sheet 200, the CD direction is the width direction of the electrode sheet 200, and the THD direction is the thickness direction of the electrode sheet 200.

Hereinafter, the step (a) of the method for manufacturing an electrode according to an embodiment of the present disclosure will be described in more detail with reference to FIGS. 4, 5 (a), and 7, and particularly with reference to FIG. 7. FIG. 7 (a) illustrates a plan view of the electrode sheet 200 as viewed in the THD direction, and FIG. 7 (b) illustrates a cross-sectional view of the electrode sheet 200 as viewed in the MD direction.

As described above, in the step (a), an anti-camber member 300 may be disposed on the electrode sheet 200. The anti-camber member 300 may be provided in a strip shape corresponding to the uncoated portion 210. That is, the anti-camber member 300 may be provided in a long shape corresponding to the uncoated portion 210 to be formed in the step (f). The anti-camber member 300 may be disposed in the first area A1.

The anti-camber member 300 may be attached to the first area A1. For example, the anti-camber member 300 may be bonded to the first area A1. The anti-camber member 300 may be provided in the form of a tape.

When the anti-camber member 300 is provided as described above, the anti-camber member 300 may be easily and accurately attached to the electrode sheet 200, thereby increasing the process efficiency of the step (a). Additionally, the anti-camber member 300 may be firmly and stably disposed on the electrode sheet 200.

The anti-camber member 300 may include at least one material of polypropylene, polyimide, and polyethylene terephthalate. When the anti-camber member 300 includes such materials, it may have excellent durability, suitable rigidity, and flexibility.

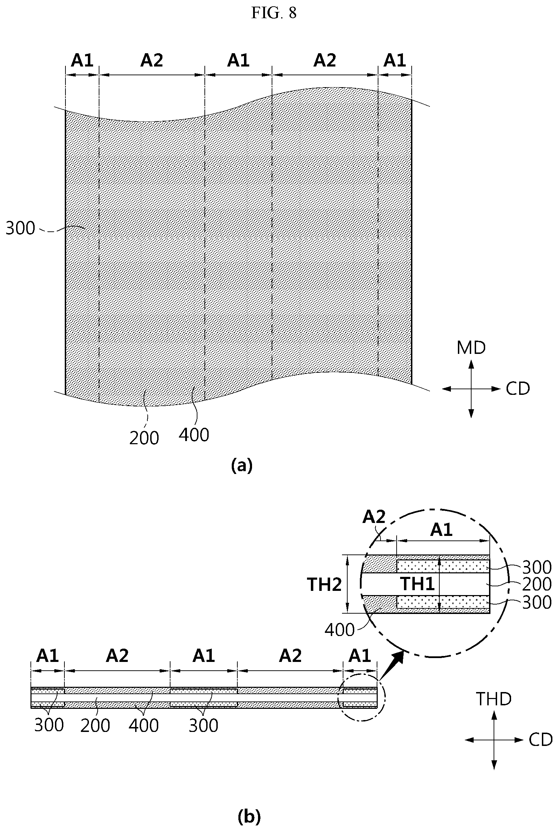

FIG. 8 shows an electrode sheet after undergoing step (b) of a method for manufacturing an electrode according to an embodiment of the present disclosure.

Hereinafter, the step (b) of the method for manufacturing an electrode according to an embodiment of the present disclosure will be described in more detail with reference to FIGS. 4, 5 (b), and 8, and particularly with reference to FIG. 8. FIG. 8 (a) illustrates a plan view of the electrode sheet 200 as viewed in the THD direction, and FIG. 8 (b) illustrates a cross-sectional view of the electrode sheet 200 as viewed in the MD direction.

As described above, in the step (b), a slurry may be coated on at least a second area A2 of the electrode sheet 200 to laminate an active material layer 400. In the step (b), the total thickness of the first area A1 and the total thickness of the second area A2 may be formed to be approximately equal to each other. Preferably, the total thickness of the first area A1 and the total thickness of the second area A2 may be formed to be equal.

Specifically, the total thickness of the first area A1 may be formed as a first thickness TH1. The first thickness TH1 may be the total sum of the thickness of the electrode sheet 200 corresponding to the first area A1, the total thickness of the anti-camber member 300 disposed in the first area A1, and the total thickness of the active material layer 400 laminated on the anti-camber member 300.

The total thickness of the second area A2 may be formed as a second thickness TH2. The second thickness TH2 may be the total sum of the thickness of the electrode sheet 200 corresponding to the second area A2 and the total thickness of the active material layer 400 laminated on the second area A2.

The first thickness TH1 and the second thickness TH2 may be formed to be approximately equal to each other, or preferably, to be equal. In this case, the thickness difference for each position in the electrode sheet 200 may be significantly reduced, and thus both the first area A1 and the second area A2 of the electrode sheet 200 may be rolled more reliably in the step (c).

In the step (b), the slurry may be coated on both the second area A2 of the electrode sheet 200 and the outer surface of the anti-camber member 300. That is, the active material layer 400 may be formed on both the second area A2 of the electrode sheet 200 and the outer surface of the anti-camber member 300. Here, the outer surface of the anti-camber member 300 may be understood as the surface disposed on the opposite side of the electrode sheet 200 in the anti-camber member 300.

When the slurry is coated as described above, the thickness of the active material layer 400 may be formed uniformly in the second area A2 of the electrode sheet 200. In particular, the occurrence of height differences of the active material layer 400 at the boundary between the second area A2 and the first area A1 may be effectively and easily suppressed.

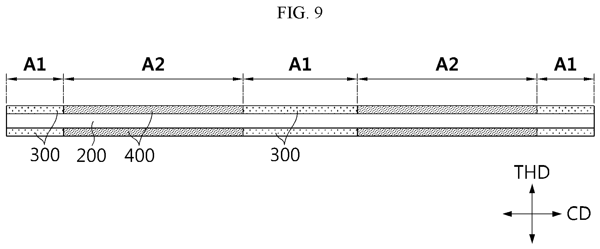

FIG. 9 is a cross-sectional view showing an electrode sheet after undergoing step (b) of a method for manufacturing an electrode according to a modified example of an embodiment of the present disclosure.

Referring to FIG. 9 compared to FIG. 8, in the step (b) of the method for manufacturing an electrode according to a modified example of an embodiment of the present disclosure, the active material layer 400 may be laminated only on the second area A2 of the electrode sheet 200 and not on the first area A1 of the electrode sheet 200. In this case, the thickness of the anti-camber member 300 and the thickness of the active material layer 400 in the second area A2 may be equal to each other. Additionally, the first thickness TH1 described above may be the sum of the thickness of the electrode sheet 200 corresponding to the first area A1 and the total thickness of the anti-camber member 300 disposed in the first area A1.

According to the method for manufacturing an electrode according to a modified example of an embodiment of the present disclosure, the amount of active material layer 400 discarded when removing the anti-camber member 300 in the step (f) may be reduced.

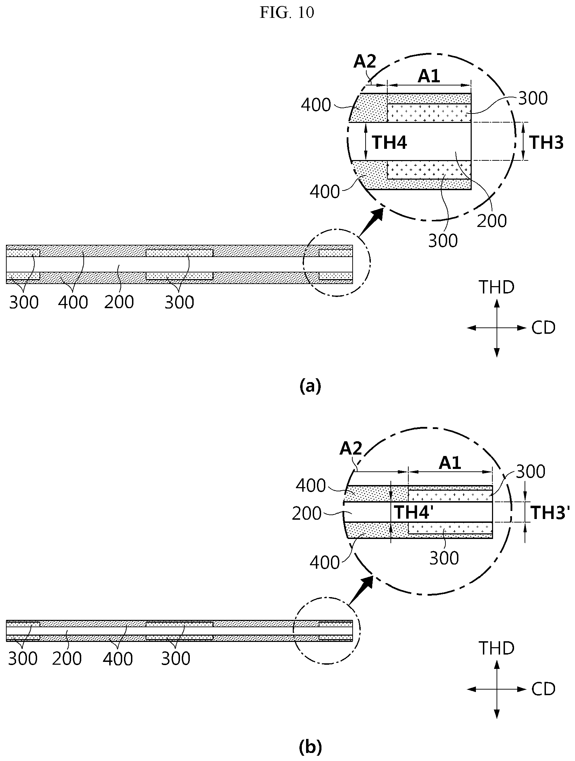

FIG. 10 shows an electrode sheet after undergoing step (c) of a method for manufacturing an electrode according to an embodiment of the present disclosure.

Hereinafter, the step (c) of the method for manufacturing an electrode according to an embodiment of the present disclosure will be described in more detail with reference to FIGS. 4, 5 (c), and 10, and particularly with reference to FIG. 10. FIG. 10 (a) illustrates a cross-sectional view of the electrode sheet 200 before being rolled as viewed in the MD direction, and FIG. 10 (b) illustrates a cross-sectional view of the electrode sheet 200 after being rolled as viewed in the MD direction.

As described above, in the step (c), the electrode sheet 200 on which the active material layer 400 is laminated may be rolled. The electrode sheet 200 rolled in the step (c) may be formed such that the thickness of the first area A1 and the thickness of the second area A2 are equal to each other. That is, the thickness of the electrode sheet 200 corresponding to the first area A1 in the rolled state and the thickness of the electrode sheet 200 corresponding to the second area A2 in the rolled state may be formed to be equal to each other.

Specifically, in a state before being rolled, the first area A1 of the electrode sheet 200 has a third thickness TH3, and the second area A2 of the electrode sheet 200 has a fourth thickness TH4. The third thickness TH3 and the fourth thickness TH4 may be equal. And, in a state after being rolled, the first area A1 of the electrode sheet 200 has a third thickness TH3', and the second area A2 of the electrode sheet 200 has a fourth thickness TH4'. The third thickness TH3' and the fourth thickness TH4' may be equal.

As described above, even after rolling through the step (c), if the thickness of the first area A1 and the thickness of the second area A2 of the electrode sheet 200 are formed to be equal, there is no difference in the amount of elongation due to rolling between the first area A1 and the second area A2 of the electrode sheet 200, and thus the camber phenomenon of the electrode sheet 200 may be prevented more effectively.

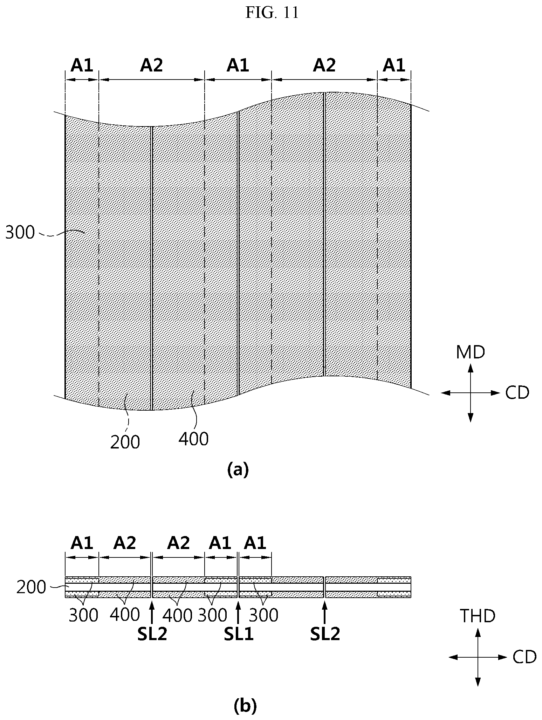

FIG. 11 shows an electrode sheet after undergoing step (d) of a method for manufacturing an electrode according to an embodiment of the present disclosure.

Hereinafter, the step (d) of the method for manufacturing an electrode according to an embodiment of the present disclosure will be described in more detail with reference to FIGS. 4, 5 (d), and 11, and particularly with reference to FIG. 11. FIG. 11 (a) illustrates a plan view of the electrode sheet 200 as viewed in the THD direction, and FIG. 11 (b) illustrates a cross-sectional view of the electrode sheet 200 as viewed in the MD direction.

As described above, in the step (d), the rolled electrode sheet 200 may be slit. The step (d) may include a step (d-1). The step (d-1) may be a step in which the first area A1 of the electrode sheet 200 is slit. A plurality of first areas A1 may be formed in the electrode sheet 200. For example, as illustrated in FIG. 11, the first areas A1 may be formed at the edge and center of the electrode sheet 200. The width of the first area A1 formed at the center may be formed larger than the width of the first area A1 formed at the edge. In the step (d-1), the first area A1 with the relatively larger width, as described above, may be slit. After the step (d-1), a first cut line SL1 may be formed in the electrode sheet 200.

As described above, when the step (d) includes the step (d-1), the number of required anti-camber members 300 may be reduced. Additionally, in the step (d-1), the first area A1 of the electrode sheet 200 is slit with the anti-camber member 300 already disposed, which may effectively prevent unintentional damage to the electrode sheet 200, such as tearing, during the slitting process.

Meanwhile, the step (d) may further include a step (d-2). The step (d-2) may be a step of slitting the second area A2 of the electrode sheet 200. That is, in the step (d-2), the portion of the electrode sheet 200 where the coated portion is to be formed may be slit. After the step (d-2), a second cut line SL2 may be formed in the electrode sheet 200.

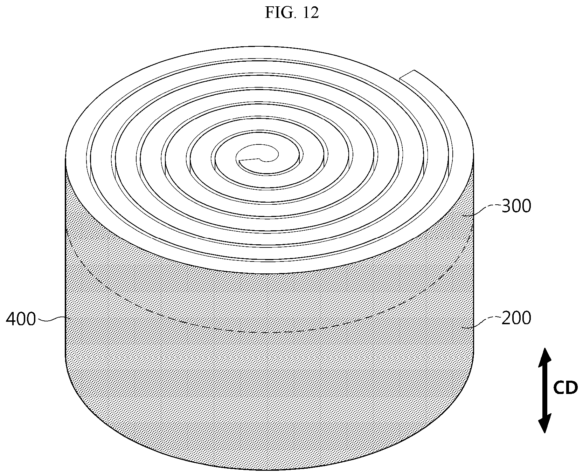

FIG. 12 shows a state in which an electrode sheet is stored in step (e) of a method for manufacturing an electrode according to an embodiment of the present disclosure.

Hereinafter, the step (e) of the method for manufacturing an electrode according to an embodiment of the present disclosure will be described in more detail with reference to FIGS. 4, 5 (e), and 12, and particularly with reference to FIG. 12.

As described above, the step (e) may be a step of storing the slit electrode sheet 200. In the step (e), the electrode sheet 200 may be stored in a wound state. That is, the electrode sheet 200 may be stored in a so-called pancake state. In this case, not only the storage of the electrode sheet 200 but also the conveyance or transfer thereof may be easily and efficiently performed.

When the electrode sheet 200 is stored in a wound state in the step (e), various stresses, such as circumferential stress and radial stress, may act on the electrode sheet 200. In this case, the phenomenon of deepening camber of the electrode sheet 200 over time may become more severe. However, according to the method for manufacturing an electrode according to an embodiment of the present disclosure, the electrode sheet 200 may be stored with the anti-camber member 300 disposed, and thus, even if the electrode sheet 200 is stored in a wound state as described above, the phenomenon of deepening camber of the electrode sheet 200 over time may be effectively prevented.

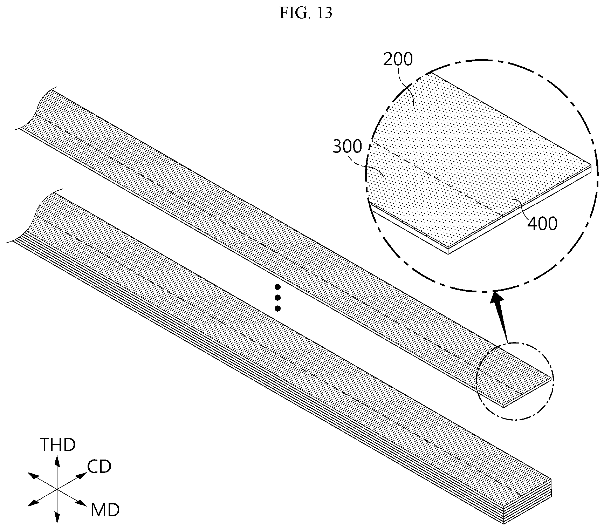

FIG. 13 shows a state in which an electrode sheet is stored in step (e) of a method for manufacturing an electrode according to another modified example of an embodiment of the present disclosure.

Hereinafter, the step (e) of the method for manufacturing an electrode according to another modified example of an embodiment of the present disclosure will be described in more detail with reference to FIGS. 4, 5 (e), and 13, and particularly with reference to FIG. 13.

In the step (e) of the method for manufacturing an electrode according to another modified example of an embodiment of the present disclosure, the electrode sheets 200 may be stacked and stored in an unfolded state. For example, a plurality of electrode sheets 200 may be stacked and stored vertically.

When the electrode sheets 200 are stacked and stored as described above in the step (e), the anti-camber member 300 may support the first area A1, thereby preventing the first area A1 from sagging in the direction of gravity. Specifically, when the electrode sheets 200 without the anti-camber member 300 being disposed are stacked vertically, the first areas A1 of two vertically adjacent electrode sheets 200 are spaced apart from each other, and thus the first area A1 of the electrode sheet 200 disposed on the upper side may bend in the direction of gravity. However, in the case where the anti-camber member 300 is disposed in the first area A1 as in the present disclosure, the anti-camber member 300 of one electrode sheet 200 disposed on the lower side may support the anti-camber member 300 of the other electrode sheet 200 disposed on the upper side upward, so that the first area A1 of the other electrode sheet 200 disposed on the upper side may be effectively prevented from sagging downward.

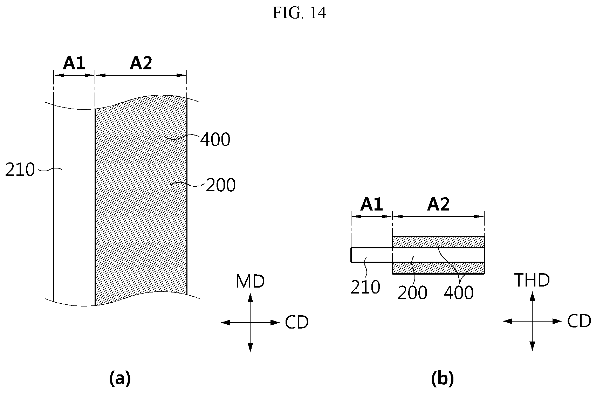

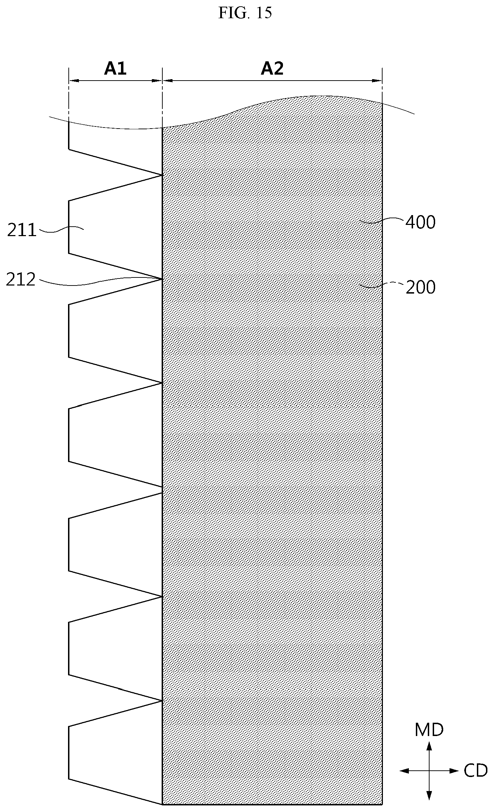

FIGS. 14 and 15 show an electrode sheet after undergoing step (f) of a method for manufacturing an electrode according to an embodiment of the present disclosure.

Hereinafter, the step (f) of the method for manufacturing an electrode according to an embodiment of the present disclosure will be described in more detail with reference to FIGS. 4, 5 (f), 14, and 15, and particularly with reference to FIGS. 14 and 15. FIG. 14 (a) illustrates a plan view of the electrode sheet 200 as viewed in the THD direction, and FIG. 14 (b) illustrates a cross-sectional view of the electrode sheet 200 as viewed in the MD direction.

In the step (f), the anti-camber member 300 may be removed from the electrode sheet 200 stored after being slit. When the anti-camber member 300 is removed, an uncoated portion 210 on which an active material layer 400 is not laminated may be formed in the first area A1 of the electrode sheet 200. In the step (f), the uncoated portion 210 may be formed on one long side of the electrode sheet 200. For example, as illustrated in FIG. 14, the uncoated portion 210 may be formed on the left long side of the electrode sheet 200.

When the anti-camber member 300 is removed from the electrode sheet 200 to form the uncoated portion 210, the uncoated portion 210 may be notched to form a plurality of notching tabs 211 on the uncoated portion 210. At least one notching portion 212 formed by the notching process may be formed between two adjacent notching tabs 211. The notching process may proceed immediately after the uncoated portion 210 is formed on the electrode sheet 200.

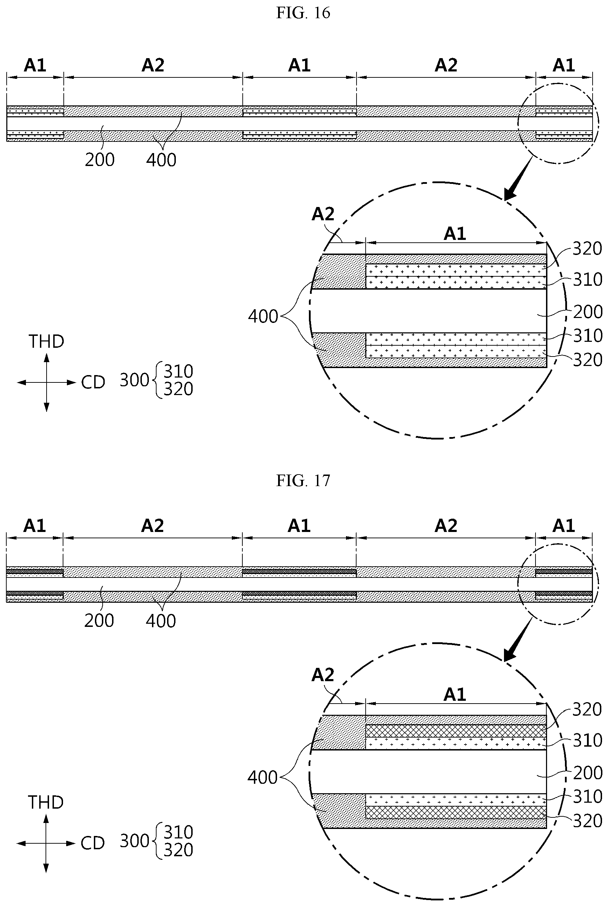

FIG. 16 is a cross-sectional view showing an electrode sheet after undergoing step (c) of a method for manufacturing an electrode according to another embodiment of the present disclosure.

Referring to FIG. 16, in a method for manufacturing an electrode according to another embodiment of the present disclosure, the anti-camber member 300 may be configured with a plurality of layers. For example, as illustrated in FIG. 16, a first anti-camber member 310 may be disposed at a position relatively close to the electrode sheet 200, and a second anti-camber member 320 may be laminated on the first anti-camber member 310 and disposed at a position relatively far from the electrode sheet 200. Alternatively, the anti-camber member 300 may be configured with three or more layers.

As described above, when the anti-camber member 300 is configured with a plurality of layers, the thickness of the anti-camber member 300 may be easily adjusted as needed, and thus there is an advantage of facilitating design changes of the thickness of the active material layer 400 of the second area A2 or the rigidity of the anti-camber member 300.

FIG. 17 is a cross-sectional view showing an electrode sheet after undergoing step (c) of a method for manufacturing an electrode according to still another embodiment of the present disclosure.

Referring to FIG. 17, in a method for manufacturing an electrode according to still another embodiment of the present disclosure, the anti-camber member 300 is configured with a plurality of layers, as in the method for manufacturing an electrode according to another embodiment of the present disclosure, but one layer of the anti-camber member 300 and another layer of the anti-camber member 300 may be provided with different physical properties (e.g., rigidity, flexibility, chemical resistance, heat resistance, or the like). For example, as illustrated in FIG. 17, a first anti-camber member 310 positioned relatively close to the electrode sheet 200 and a second anti-camber member 320 positioned relatively far from the electrode sheet 200 may be provided with different physical properties. The first anti-camber member 310 and the second anti-camber member 320 may be provided with different materials or different compositions.

As described above, when one layer and another layer of the anti-camber member 300 are provided with different physical properties from each other, there is an advantage in that the rigidity or flexibility of the anti-camber member 300 may be applied in various ways as needed.

Terms indicating directions such as upper, lower, left, right, front, and rear may be used in this specification, but these terms are only for convenience of description, and it is obvious to those skilled in the art that the terms may change depending on the position of the stated element or an observer.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [Explanation of Reference Signs]

1: Battery cell
10: Electrode assembly
11: Electrode
11a: First electrode
11b: Second electrode
12: Separator
20: Cell housing
30: Cap
40: First current collector plate
50: Second current collector plate
60: Terminal
70: Insulating gasket
80: Insulator
111: Coated portion
112: Uncoated portion
113: Foil tab
114: Notching portion
115: Insulating coating portion
200: Electrode sheet
210: Uncoated portion
211: Notching tab
212: Notching portion
300: Anti-camber member
310: First anti-camber member
320: Second anti-camber member
400: Active material layer
A1: First area
A2: Second area
SL1: First cut line
SL2: Second cut line

## Claims

1. A method for manufacturing an electrode in which an uncoated portion is formed on one long side by extending along the length direction of the long side, the method for manufacturing an electrode comprising:
step (a) of placing an anti-camber member in a first area where the uncoated portion of an electrode sheet is to be formed;
step (b) of coating a slurry on at least a second area of the electrode sheet to laminate an active material layer, wherein the second area is an area of the electrode sheet excluding the first area;
step (c) of rolling the electrode sheet where the active material layer is laminated so that both the first area and the second area of the electrode sheet are elongated;
step (d) of slitting the rolled electrode sheet;
step (e) of storing the slit electrode sheet; and
step (f) of removing the anti-camber member from the electrode sheet to form the uncoated portion and then notching the uncoated portion.

2. The method for manufacturing an electrode according to claim 1,
wherein the step (e) is a step in which the slit electrode sheet is stored for a first period of time,
wherein the step (f) proceeds for a second period of time from the point at which the step (e) is completed, and
wherein the first period of time is longer than the second period of time.

3. The method for manufacturing an electrode according to claim 1,
wherein the anti-camber member is provided in a strip shape corresponding to the uncoated portion, and
wherein in the step (a), the anti-camber member is attached to the first area of the electrode sheet.

4. The method for manufacturing an electrode according to claim 3,
wherein the anti-camber member comprises at least one material of polypropylene, polyimide, and polyethylene terephthalate.

5. The method for manufacturing an electrode according to claim 1,
wherein in the step (b), the total thickness of the first area and the total thickness of the second area are formed to be approximately equal to each other.

6. The method for manufacturing an electrode according to claim 1,
wherein in the step (b), the slurry is coated on both the second area of the electrode sheet and the outer surface of the anti-camber member.

7. The method for manufacturing an electrode according to claim 1,
wherein the electrode sheet rolled in the step (c) is formed such that the thickness of the first area and the thickness of the second area are equal to each other.

8. The method for manufacturing an electrode according to claim 1,
wherein the step (d) comprises a step (d-1) in which the first area of the electrode sheet is slit.

9. The method for manufacturing an electrode according to claim 1,
wherein in the step (e), the electrode sheet is stored in a wound state.

10. The method for manufacturing an electrode according to claim 1,
wherein in the step (e), the electrode sheet is stored in a stacked state.

11. The method for manufacturing an electrode according to claim 1,
wherein the anti-camber member is configured with a plurality of layers.

12. The method for manufacturing an electrode according to claim 11,
wherein the anti-camber member is provided such that one layer of the anti-camber member and another layer of the anti-camber member have different physical properties.

13. An electrode manufactured by the method for manufacturing an electrode according to any one of claims 1 to 12.

14. A battery cell comprising at least one electrode according to claim 13.
